# EUROPÄISCHE PATENTSCHRIFT

(11) **EP 1 626 794 B1**
(45) Veröffentlichungstag und Bekanntmachung des Hinweises auf die Patenterteilung: **11.10.2006**
(21) Anmeldenummer: 04727271.1
(22) Anmeldetag: 14.04.2004
(51) Int. Cl.: B01D 35/06, B03C 1/28, B01D 29/15

(54) **FILTERELEMENT**
FILTER ELEMENT
ELEMENT DE FILTRE

(30) Priorität: 22.05.2003 DE 10323075
(43) Veröffentlichungstag der Anmeldung: 22.02.2006
(73) Patentinhaber: Hydac Process Technology GmbH, 66538 Neunkirchen (DE)
(72) Erfinder: WNUK, Ralf, 66450 Bexbach (DE); LAHBIB, Seddik, F-57600 Forbach (FR); OLSCHOK, Markus, 66540 Neunkirchen (DE)
(74) Vertreter: Bartels, Martin Erich Arthur
(86) Internationale Anmeldenummer: PCT/EP2004/003904
(87) Internationale Veröffentlichungsnummer: WO 2004/103525

(56) Entgegenhaltungen:
- EP-B- 0 968 039
- DE-U- 29 616 234
- FR-A- 2 718 065
- US-A- 2 184 243

## Beschreibung

Die Erfindung betrifft ein Filterelement, insbesondere für den Einsatz bei Rückspülfiltervorrichtungen, mit einem Filtrationsteil, das zumindest in einer Richtung von einem Verschmutzungen aufweisenden Fluid durchströmbar ist, wobei eine Abfangeinrichtung vorhanden ist, die mindestens einen stabartigen Permanent- oder Elektromagneten aufweist, der magnetisierbare, insbesondere ferritische Anteile, zumindest teilweise aus dem Fluid entfernt bevor dieses durch das Filtrationsteil strömt, wobei eine Ablöseeinrichtung vorhanden ist zum Entfernen der genannten Anteile von der Abfangeinrichtung.

Durch die EP-0 968 039 B1 ist eine Rückspülfiltervorrichtung für den Einsatz von Spaltsiebrohrfilterelementen bekannt, die in einem Gehäuse mit einem Filtereinlaß und einem Auslaß für das zu filtrierende Fluid aufnehmbar sind, wobei die Filterelemente für eine Filtration oder Rückspülung in beiden Richtungen durchströmbar sind und wobei für die Rückspülung ein antreibbarer Spülarm vorgesehen ist, der einen Fluidaustritt für verschmutztes Fluid aufweist und der nacheinander unter die Durchlaßquerschnitte der Filterelemente verfahrbar ist. Bei der bekannten Lösung ist zumindest ein Teil der eingesetzten Spaltsiebrohrfilterelemente konisch ausgebildet, wobei die Baulänge der konischen Filterelemente mindestens zehnmal größer ist als der größte vorhandene Durchlaßquerschnitt für das Fluid, wobei der Abstand zwischen den einzelnen konischen Spaltsiebrohrfilterelementen oder zwischen diesen und den zylindrischen in Richtung ihrer freien Enden vergrößert ist mit der Folge, dass auch der Ausströmraum im Filtergehäuse vergrößert und mithin der Abströmwiderstand im Filterbetrieb erniedrigt ist. Beim Rückspülen ist das konische Spaltsiebrohrfilterelement gegenüber einem zylindrischen eindeutig im Vorteil, wobei ursächlich hierfür in erster Linie der relativ größere Austrittsquerschnitt der konischen Filterelemente gegenüber zylindrischen bei gleicher Filteroberfläche ist. Da der Austrittsquerschnitt bei den konischen Filterelementen gegenüber dem durch die Filteroberfläche gebildeten Eintrittsquerschnitt, also der freien Elementfläche, jedoch relativ klein ist, bildet sich hier, abhängig von der Größe des Strömungswiderstandes des Spaltrohres, ein Engpaß, in dem ein großer Teil des Systemdrucks abfällt. Es treten also bei der bekannten Lösung geringe Druckverluste auf, was energetisch sich günstig beim Rückspülen auswirkt.

Beim Rückspülen wird ein Großteil des Volumendurchsatzes bei konischen und zylindrischen Filterelementen grundsätzlich am unteren Filterende erzielt und die Volumenströme nehmen sehr schnell ab. Da das konische Element wesentlich weiter zurückgespült wird, ist zusätzlich der Geschwindigkeitsgradient geringer, so dass unter Einbeziehung der Geschwindigkeitsprofile bezogen auf die Filteroberfläche sich aufgrund der Elementkonizität ein zusätzlicher Reinigungseffekt gegenüber zylindrischen Elementen ergibt. Durch die erreichte, im wesentlichen konstante Geschwindigkeit bei der Abreinigung der konischen Filterelemente erfolgt dies schonend, was die Standzeit dahingehender Filterelemente verlängert.

Durch die DE 40 30 084 A1 ist eine Rückspülvorrichtung bekannt, die mit der zu filtrierenden Schmutzflüssigkeit rückgespült werden kann, vorzugsweise im Gegenstrom zur Filtrierrichtung. Die bekannte Lösung weist im Filtergehäuse eine Vielzahl an Filterzellen in kreisförmiger Anordnung auf, die mit Hilfe eines von einem Drehantrieb angetriebenen Spülarmes einzeln oder in kleinen Gruppen zur Rückspülung mit dem Schlammablauf verbunden werden können. Obwohl bei der bekannten Anordnung beim Rückspülvorgang die Schmutzflüssigkeit die Filterzellen mit hoher turbulenter Geschwindigkeit in Längsrichtung durchströmt und dabei die abgelagerten Schmutzstoffe löst und abführt, ist das Filtrier- und Rückspülergebnis verbesserbar. Da die Filterelemente zylindrisch aufgebaut sind, stehen diese im Filtergehäuse dicht nebeneinander und der freie Ausströmraum im Filtergehäuse ist entsprechend klein, so dass im normalen Filtrierbetrieb durch die gegenseitige Beeinflussung der zylindrischen Filterelemente zueinander der Ausströmwiderstand für das filtrierte Fluid erhöht ist und mithin auch die Druckdifferenz zwischen Filtereinlaß und -auslaß. Dies führt jedoch zu einer insgesamt schlechten Energiebilanz bei der beschriebenen bekannten Lösung.

Selbst wenn, wie in der DE 83 06 970 U beschrieben, die zylindrischen Filterelemente in einem deutlichen Abstand zueinander innerhalb des Filtergehäuses angeordnet sind, entsteht insbesondere beim Rückspülen dieser zylindrischen Filterelemente ein nicht gleichförmiger Flüssigkeitsstrom mit der Folge, dass die Fluidgeschwindigkeit innerhalb der zylindrischen Elemente ständig zunimmt, was sich ebenfalls ungünstig auf die Energiebilanz der gesamten Rückspülvorrichtung auswirkt.

Durch die DE 38 12 876 A1 ist ein konisches Filterelement bekannt, das dem Filtern und Abscheiden unterschiedlicher Substanzen und Partikel dient, wobei ein konisch gewundener Draht in der Form einer Spirale oder eines wendelförmigen Kegels innerhalb von aufeinander zulaufenden Stützstäben geführt ist. Durch die gedrungene konische Bauform, bei der das Längen-Breiten-Verhältnis im Bereich von 1 ist, ist eine Art Trichtereffekt erzeugt, der die Abscheideleistung erhöhen soll. Selbst, wenn man das dahingehende konische Filter- und Abscheideelement in einer Rückspülvorrichtung einsetzen würde, würde jedenfalls derart kein größerer Austrittsquerschnitt für das Fluid gegenüber dem durch die Filterfläche gebildeten Eintrittsquerschnitt erreicht werden und somit treten erhöhte Strömungswiderstände auf, die insbesondere beim Rückspülen den Wirkungsgrad beeinträchtigen. Eine hierzu vergleichbare Vorrichtung ist auch durch die US-A-2,237,964 bekannt.

Werden die konischen oder zylindrischen Filterelemente nach dem vorstehend beschriebenen Stand der Technik sowie die dahingehenden Rückspülfiltervorrichtungen für Filtrationsaufgaben eingesetzt, bei denen in hohem Maße ferritische Anteile als Verschmutzungen im Fluidstrom anzutreffen sind, was beispielsweise häufig bei zu filtrierenden Kühlschmiermittelflüssigkeiten der Fall ist, kommen die beschriebenen bekannten Lösungen jedoch an ihre Leistungsgrenzen. Zwar filtrieren diese die ferritischen Anteile aus dem Fluidstrom; die freien Filterporen des jeweils eingesetzten Filtrationsmaterials setzen sich aber dermaßen schnell mit den ferritischen Anteilen zu, dass es alsbald zu einem Verblocken des Filtrationsteils des jeweiligen Filterelementes kommt, unabhängig davon ob dieses konisch oder zylindrisch aufgebaut ist. Selbst wenn dahingehende Filterelemente dann in Rückspülfiltervorrichtungen ihren Einsatz finden, bei denen die Möglichkeit besteht, zum Abreinigen des Filtrationsteils in gegensätzlicher Durchströmungsrichtung von der Reinseite her das jeweilige Filterelement gegenzuspülen, sind zum einen die dahingehenden Abreinigungsvorgänge dann ausgesprochen häufig vorzunehmen, was die Filtrationsleistung.der jeweiligen Vorrichtung beeinträchtigt, und zum anderen kommt es häufig zu einem Verkleben oder Verbacken der ferritischen Anteile mit dem Filtermaterial des Filtrationsteils, so dass insoweit auch beim Rückspülen die ferritische Verschmutzung gegebenenfalls in Verbindung mit anderen Verschmutzungsanteilen im Filtrationsteil verbleibt oder es beim Abreinigen gar zu Schädigungen am Filtrationsteil, insbesondere an seiner Filtrationsschicht oder dem Spaltsiebrohrmaterial des Filterelementes kommt.

Durch die FR-2 718 065 A1 ist ein gattungsgemäßes Filterelement bekannt, das von innen nach außen durchströmt die Abreinigung des Fluids von Verschmutzungen vornimmt. In dem Filterelement mit seinem zylindrischen Mattenaufbau sind zwei stabartige Permanentmagnete angeordnet, die magnetisierbare, insbesondere ferritische Anteile, aus dem Fluid beim Durchströmen des Filterelementes abfangen. Um die stabartigen Permanentmagnete von den abgefangenen ferritischen Anteilen zu befreien, ist als Ablöseeinrichtung eine Abstreifplatte vorgesehen, die die stabartigen Permanentmagnete außenumfangseitig umfaßt und die mittels eines Hydraulik-oder Pneumatikzylinders innerhalb des Filterelementeraumes verfahrbar angeordnet ist und in einer Bewegungsrichtung von oben nach unten in der Gebrauchsstellung des Filterelementes die Abreinigung vornimmt, wobei der Austrag der ferritischen Anteile auf der Unterseite des Filtrationsteiles erfolgt, das in einem Gehäuse aufgenommen ist. Nach der Abreinigung in Form des Abstreifens wird über den Arbeitszylinder die Abstreifplatte wieder in ihre Ausgangs- oder Ruhestellung oberhalb des eigentlichen Filterelementes zurückgestellt, so dass die bekannte Lösung, insbesondere auch durch Einsatz des Arbeitszylinders in axialer Richtung nicht nur groß aufbaut, sondern für die Abreinigung oder Abstreifung auch noch zusätzlich Energie beim Betrieb des jeweiligen Arbeitszylinders benötigt.

Ausgehend von diesem Stand der Technik liegt der Erfindung die Aufgabe zugrunde, die bekannten Filterelementlösungen, insbesondere auch vorgesehen für den Einsatz bei Rückspülfiltervorrichtungen, dergestalt weiter zu verbessern, dass beim Auftreten magnetisierbarer, insbesondere ferritischer Anteile in dem zu filtrierenden Fluidstrom es nicht zu den beschriebenen Nachteilen kommt, insbesondere nicht zu groß aufbauenden Vorrichtungen die für den Äbstreifbetrieb Zusatzenergie benötigen. Eine dahingehende Aufgabe löst ein Filterelement mit den Merkmalen des Patentanspruches 1 in seiner Gesamtheit.

Dadurch, dass gemäß dem kennzeichnenden Teil des Patentanspruches 1 die Ablöseeinrichtung aus einem Abstreifring gebildet ist, der entlang des stabartigen Magneten verfahrbar die Entfernung der von der Abfangeinrichtung festgehaltenen Anteile vornimmt und dass beim Rückspülen des Filtrationsteils der Abstreifring vom Fluidstrom bewegt die Ablösung der an der Abfangeinrichtung festgelegten Anteile vornimmt, wird sichergestellt, dass die die Filtrationsleistung sowie das Filterelementmaterial beeinträchtigende magnetisierbare, insbesondere ferritische Anfeilskomponente an den aus dem Fluid abzufiltrierenden Verschmutzungen erst gar nicht das Filtrationsteil mit seinem selektiven Filtermaterial erreichen kann, sondern in wesentlichen Teilen aus dem Fluidstrom vorher abgetrennt wird. Die dahingehende Abtrennung durch Abfangen der magnetisierbaren, insbesondere ferritischen Anteile, erfolgt auch dann in sehr guter Weise, wenn die dahingehenden Anteile einen Großteil der Verschmutzungen an dem zu filtrierenden Fluid ausmachen. Des weiteren kann die Selektivität des Filtrationsteils mit seinem Filtermaterial sich an den üblich zu erwartenden Verschmutzungen ausrichten, so dass hier keine speziellen, insbesondere kostenintensiven Anpassungen notwendig sind, sondern vielmehr kann das Filtrationsteil im Rahmen des üblichen ausgewählt werden und über die Abfangeinrichtung ist sichergestellt, dass das selektive Material nicht mit den magnetisierbaren Verschmutzungsanteilen in maßgeblichem Umfang überhaupt in Berührung kommt. Demgemäß ist die erfindungsgemäße Filterelementlösung auch besonders kostengünstig und damit wirtschaftlich umsetzbar.

Die Ablöseeinrichtung ist erfindungsgemäß aus einem Abstreifring gebildet, der entlang des stabartigen Magneten verfahrbar die Entfernung der von der Abfangeinrichtung festgehaltenen Fluidanteile vornimmt. Der Abstreifring befindet sich im normalen Filtrationsbetrieb, vorzugsweise in einem endteiligen Bereich des Magneten, und erlaubt dergestalt das Ansammeln des magnetisierbaren Materials an dem Magneten. Bei einer etwaigen Rückspülung des Filterelementes bei dem die Durchströmungsrichtung umgekehrt wird und Fluid von der Reinseite in entgegengesetzter Richtung das Filtrationsteil durchfließt, nimmt der abgereinigte Fluidstrom den Abstreifring mit, der dann automatisch die Abreinigung des stabartigen Magneten von dem abgefangenen magnetisierbaren Material vornimmt, wobei an den dahingehenden magnetisierbaren Teilen weitere Verschmutzungsanteile mit angelagert sein können, die dergestalt gleichfalls mit abgelöst werden.

Sofern der Magnet aus einem Elektromagneten gebildet ist, läßt sich die Ablösung durch den unbestromten Zustand des dahingehenden Magneten weiter begünstigen und etwaige Remanenzeigenschaften lassen sich durch Umpolen des Feldes des jeweils eingesetzten Elektromagneten erreichen.

In besonders vorteilhafter Weise ist dabei vorgesehen, dass das Filterelement mit seinem Filtrationsteil konisch ausgebildet ist und dass die Baulänge des Elementes mindestens zehnmal größer ist als der größte vorhandene Durchlaßquerschnitt für das Fluid. Es hat sich gezeigt, dass aufgrund der beschriebenen Strömungsverhältnisse im konischen Filterelement dies die Ablagerung des magnetisierbaren Materials an der Abfangeinrichtung begünstigt, wobei der Mantelaufbau des eingefangenen magnetisierbaren, insbesondere ferritischen Materials an der Abfangeinrichtung der konischen Mantelgestaltung des Filterelementes nachfolgt, so dass die Ablagerungen an der Abfangeinrichtung den freien Durchströmungsquerschnitt innerhalb des Filterelementes nicht wesentlich nachteilig beeinflussen, weil die freien Fluidströmwege im Durchmesser über die Länge der Abfangeinrichtung konstant bleiben. Demgemäß zeigt es sich, dass aufgrund der günstigen Strömungsverhältnisse beim Rückspülen mit einem konischen Filterelement es genügt, wenn sich die Abfangeinrichtung längs der Hälfte des Filtrationsteils erstreckt, an der das Fluid eintritt und wo der größte Durchlaßquerschnitt für den Fluidstrom besteht. Die beschriebene Anordnung läßt sich aber auch ohne weiteres für zylindrische Filterelemente verwenden und das Filtrationsteil kann in der Art eines Spaltsiebrohres ausgebildet sein; es kann aber auch ein übliches auch aufgefaltetes Filtermaterial in Form einer Filtermatte od. dgl. sein.

Im folgenden wird das erfindungsgemäße Filterelement anhand eines Ausführungsbeispiels nach der Zeichnung näher erläutert. Dabei zeigen in prinzipieller und nicht maßstäblicher Darstellung die
- Fig.1a: in teilweise aufgeschnittener Form eine Seitenansicht auf das Filterelement in Form eines Spaltsiebrohrfilterelementes ohne Magnet-Abfangeinrichtung;
- Fig.1b: einen Schnitt längs der Linie I - I in Fig.1a;
- Fig.1c: in vergrößerter Darstellung eine in Fig.1a mit "X" bezeichnete Einzelheit;
- Fig.2: einen Längsschnitt durch eine Rückspülfiltervorrichtung mit zylindrischen und konisch zulaufenden Filterelementen;
- Fig.3: teilweise in Ansicht, teilweise im Längsschnitt gesehen eine Seitenansicht mit dem Innenaufbau eines Filterelementes nach der Fig.1a, wobei in der Fig.3 das Filtermaterial nur prinzipiell und nicht im Detail wiedergegeben ist.

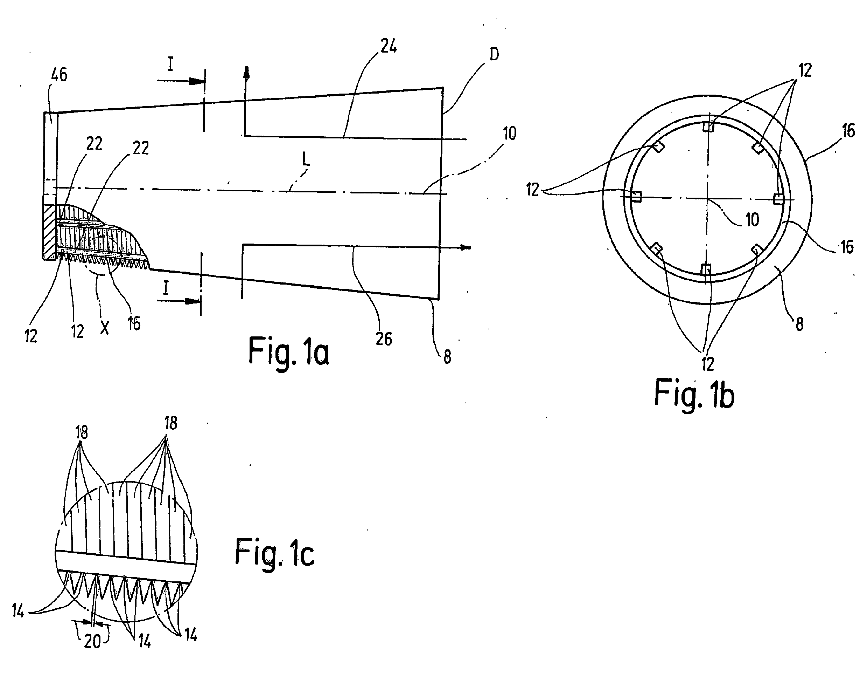

Das in der Fig.1a in Seitendarstellung gezeigte Spaltsiebrohrfilterelement 8 weist in Richtung seiner Längsachse 10 auf diese zugeneigt Stützstäbe 12 auf, um die unter Freilassen von durch ein Fluid passierbaren Spalten 14 ein Drahtprofil 16 in einzelnen Windungen 18 gewickelt ist, wobei im Bereich einer jeden Berührstelle des Drahtprofils 16 mit dem Stützstab 12 ein Schweißpunkt angeordnet ist. Die für den freien Fluiddurchtritt vorgesehene Spaltgröße, also der Abstand zwischen zwei Spalten 14, ist in der Fig.1c mit aufeinander zugewandten Pfeilen 20 dargestellt.

Wie insbesondere die Fig.1 a des weiteren zeigt, ist der jeweilige Stützstab 12 mit seinem einen Ende 22 derart auf die Längsachse 10 zugeneigt, dass ein insgesamt konisch zulaufendes Filterelement 8 gebildet ist, wobei die Windungen 18 des Drahtprofils 16 dabei sich im Durchmesser in Richtung der geneigten Enden 22 der Stützstäbe 12 verringern, was sich auch aus der Darstellung nach der Fig.1b ergibt. Anstelle eines einzigen Drahtprofils 16, wie in den Figuren dargestellt, können gegebenenfalls auch mehrere hintereinander angeordnete Drahtprofile oder übereinander angeordnete und aufgewickelte Drahtprofile (nicht dargestellt) eingesetzt werden; sofern dies für die angegebene Filtrationsaufgabe notwendig ist. Die in Richtung der Längsachse 10 gemessene Länge L des Spaltsiebrohrfilterelementes 8 ist ca. 11 mal größer als der größte vorhandene Durchlaßquerschnitt D für das Fluid am in Blickrichtung auf die Fig.1 a gesehenen rechten Ende des Filterelementes 8.

Die Stützstäbe 12 und das Drahtprofil 16 bestehen aus Edelstahl, wobei die Stützstäbe 12 im Querschnitt quadratisch und das Drahtprofil 16 dreieckförmig ist. Die auszuwählenden Spaltweiten, die in der Fig.1c mit einem Doppelpfeil 20 gekennzeichnet sind, sind an die Größe der abzufiltrierenden Festteile aus dem Fluid, insbesondere in Form von Hydrauliköl, anzupassen, wobei das filtrierte Fluid frei durch die Spalten 14 tritt und die abfiltrierten Festteile oder Schmutzteile von den Windungen 18 des Drahtprofils 16 zurückgehalten innerhalb des Filterelementes 8 verbleiben oder sich partiell in den Spalten 14 festsetzen mit der Folge, dass mit zunehmender Einsatzdauer des Spaltsiebrohrfilterelementes 8 dieses sich immer mehr zusetzt und für das Durchführen einer Filtration nicht mehr eingesetzt werden kann. In einem dahingehenden Fall ist in umgekehrter Fluiddurchtrittsrichtung das Filterelement 8 durch Rückspülen abzureinigen. In der Fig.1 a ist in prinzipieller Darstellung die Filtrationsrichtung von innen nach außen mit einem Pfeil 24 gekennzeichnet und die entgegengesetzte Rückspülrichtung mit einem Pfeil 26. Der einfacheren Darstellung wegen ist die erfindungsgemäße Magnet-Abfangeinrichtung in den Fig. 1a,b,c nicht wiedergegeben.

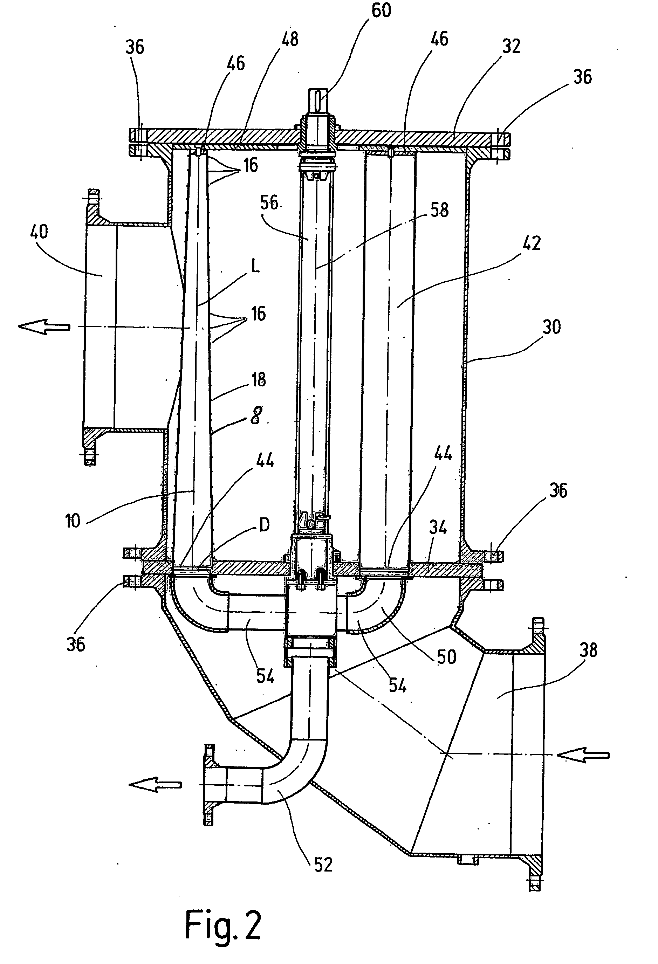

Im folgenden wird die Funktion und der Einsatz des vorbeschriebenen Spaltsiebrohrfilterelementes anhand einer Rückspülfiltervorrichtung nach der Fig.2 aufgezeigt.

Die in Fig.2 gezeigte Rückspülfiltervorrichtung weist ein zylindrisches Gehäuse 30 auf mit Abschlußdeckeln 32,34, die über Flanschverbindungen 36 an dem Filtergehäuse 30 festlegbar sind. Das Gehäuse 10 der Rückspülfiltervorrichtung weist einen Filtereinlaß 38 auf für das zu filtrierende Fluid sowie einen Filterauslaß 40 für das filtrierte Fluid. Die Fluidrichtung im Filtrierbetrieb durch das Gehäuse 30 ist in der Fig.2 mit entsprechenden Pfeilen am Filtereinlaß 38 und Filterauslaß 40 angegeben. Neben den in Blickrichtung auf Fig.2 gesehen links angeordneten konischen Filterelementen 8 sind auch zylindrische Filterelemente 42 im Einsatz. Sowohl die konischen Spaltsiebrohrfilterelemente 8 als auch die zylindrischen Spaltsiebrohrfilterelemente 42 sind in Gruppen unterteilt in Abständen voneinander mehrfach entlang von zylindrischen Kreisbögen innerhalb des Filtergehäuses 30 angeordnet. Alle in der Fig.2 dargestellten Filterelemente münden mit ihrem Einlaßquerschnitt D, also mit ihrer freien Öffnung, in zylindrische Ausnehmungen 44 des unteren Abschlußdeckels 34. An ihrem jeweils anderen gegenüberliegenden Ende sind die zum Einsatz kommenden konischen und zylindrischen Filterelemente 8 bzw. 42 mit Abschlußkappen 46 versehen, mit der jeweils das Ende eines Drahtprofils 16 verschweißt ist und über die die Filterelemente an einem plattenförmigen Zwischenstück 48 gehalten sind, an das von oben her der obere Abschlußdeckel 32 stößt.

Für die eigentliche Rückspülung der Rückspülfiltervorrichtung ist ein antreibbarer Spülarm 50 vorgesehen, der auf seiner Unterseite einen Anschluß in Form eines Fluidaustrittes 52 für verschmutztes Fluid vorsieht. Der in seiner Länge zwei unterschiedliche Armabschnitte 54 aufweisende Spülarm 50 läßt sich über ein Antriebsgestänge 56 nacheinander unter die Durchlaßquerschnitte D der konischen und der zylindrischen Filterelemente 8 bzw. 42 verfahren. Die Rückspülung erfolgt also kontinuierlich mit dem eigentlichen Filtrationsvorgang, wobei nur die Filterelemente 8, 42 rückgespült werden, und zwar von außen nach innen, mit dem gereinigten, bei der Filtration mit den sonstigen Filterelementen entstehenden filtrierten Fluid, deren freie Durchlaßquerschnitte D von den Armabschnitten 54 des Spülarmes 50 untergriffen sind. Für einen Antrieb des Antriebsgestänges 56, insbesondere in Form einer Hohlwelle, ist am oberen Abschlußdeckel 32 eine Keilwellenverbindung 60 vorgesehen, über die sich das Antriebsgestänge mit dem Motor od. dgl. für einen drehenden Umlauf um die Längsachse 56 antreiben läßt.

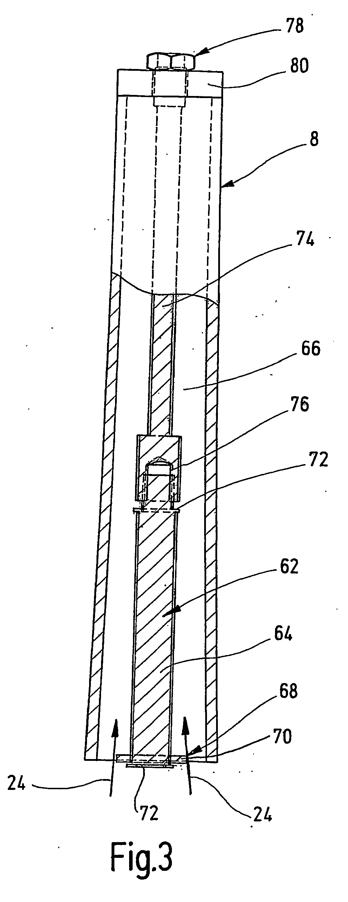

Wie die Fig.3 nunmehr anhand eines konischen Elementes 8 zeigt, ist eine als Ganzes mit 62 bezeichnete Abfangeinrichtung vorhanden, die magnetisierbare, insbesondere ferritische Anteile (nicht dargestellt) zumindest teilweise aus dem Fluid entfernt, bevor dieses in Richtung des Pfeiles 24 von innen nach außen das Filtrationsteil in Form des Spaltsiebrohrfiltermaterials durchströmt. Bei der Ausführungsform nach der Fig.3 weist die Abfangeinrichtung 62 einen Permanentmagneten 64 auf, der die magnetisierbaren, insbesondere ferritischen Fluidanteile, beispielsweise aus einem zu filtrierenden Kühlschmiermittelstrom anzieht, die sich dann an dem Permanentmagneten 64 außenumfangsseitig ablagern. Der insbesondere von den ferritischen Fluidanteilen befreite Kühlschmiermittelstrom wird dann von dem Spaltsiebrohrfiltermaterial als Filtrationsteil weiter abfiltriert und die dahingehenden Verschmutzungen werden von der Reinseite der Filtervorrichtung abgehalten.

Wie des weiteren die Fig.3 zeigt, erstreckt sich der Permanentmagnet 64 stabartig entlang der Längsachse des konischen Filterelementes 8. Der dahingehende Magnet hat mithin eine zylindrische Außenumfangsfläche, so dass innenseitig der konische Einströmraum 66 für das konische Filterelement derart erhalten bleibt. Anstelle eines einzelnen Permanentmagneten 64 kann auch eine Vielzahl von Einzelmagneten den dahingehenden Permanentmagneten (nicht näher beschrieben) aufbauen.

Des weiteren kann man anstelle des Permanentmagneten 64 auch einen Elektromagneten üblicher Bauart einsetzen. Des weiteren weist die Abfangeinrichtung 62 für die magnetisierbaren, insbesondere ferritischen Fluidanteile eine als Ganzes mit 68 bezeichnete Ablöseeinrichtung auf zum Entfernen der genannten Anteile von der Abfangeinrichtung 62. Die Ablöseeinrichtung 68 besteht aus einem Abstreifring 70, der entlang des stabartigen Permanentmagneten 64 verfahrbar die Entfernung der von der Abfangeinrichtung 62 festgehaltenen Fluidanteile vornimmt. Der Abstreifring 70 umfaßt hierbei die Außenumfangsseite des stabartigen Permanentmagneten 64 mit einem vorgebbaren radialen Spiel, welches es dem Abstreifring 70 ermöglicht, hemmfrei entlang der Außenkontur des Magneten 64 zu verfahren. Zur Begrenzung des freien Verfahrweges längs des Magneten 64 sind an diesem zwei Anschläge 72 vorgesehen, und in Blickrichtung auf die Fig.3 gesehen befindet sich der Abstreifring 70 in seiner unteren Endlage, in der er gegen den unteren Anschlag 72 verfahren ist.

Die dahingehende Position entspricht der Rückspülstellung, bei der durch die Fluidrückspülung entgegengesetzt zu der Richtung der Pfeile 24 der von den anderen Filterelementen im üblichen Filtrationsbetrieb stammende Reinstrom den Abstreifring 70 aus seiner obersten Endstellung, bei der er gegen den oberen Anschlag 72 verfahren ist, in seine untere Anschlagstellung für eine Abreinigung der Magneteinrichtung rückstellt. Bei der in der Fig.3 gezeigten Anströmrichtung über die Pfeile 24, die dem üblichen Filtrationsbetrieb dieses Filterelementes entspricht, würde mithin der Abstreifring 70 aus seiner in der Fig.3 gezeigten Stellung wieder nach oben gegen den oberen Anschlag 72 bewegt werden. Aufgrund der bereits beschriebenen Durchströmungsverhältnisse im konischen Filterelement ist der Permanentmagnet 64 nur über eine Länge innerhalb des Filterelements angeordnet, die kleiner ist als die Hälfte des dahingehenden Filterelementes. Zur Halterung des Permanentmagneten 64 dient eine Magnetstabaufnahme 74, die gleichfalls stabartig ausgebildet an ihrem unteren Ende über eine Einschraubstrecke 76 den Permanentmagneten trägt und am oberen Ende ist die Magnetstabaufnahme 74 mit einer üblichen Sechskantschraube 78 am oberen Ende des konischen Filterelementes festgelegt, das dahingehend in einer Endplatte 80 abschließt.

Die beschriebene Abfangeinrichtung 62 mit Permanentmagnet 64 kann auch für ein zylindrisches Filterelement verwendet werden, wobei dann gegebenenfalls die Magnetstrecke über die Hälfte der Länge des Filterelementes zu vergrößern ist. Bei dem konischen Filterelement hat es sich jedoch gezeigt, dass bei einem Rückspülvorgang die Abreinigung des Permanentmagneten 64 von ferritischem Material mit unterstützt wird, so dass auch ein gegebenenfalls hartnäckiger Aufbau an ferritischem Material dergestalt abgereinigt werden kann.

Des weiteren braucht die erfindungsgemäße Lösung nicht auf Filterelemente in Spalfisiebrohrform beschränkt zu sein, sondern vielmehr lassen sich dergestalt auch andere Elementformen mit anderen Filtermaterialien, beispielsweise mit einem üblichen Filtermattenaufbau dergestalt von ferritischen Anteilen im selektiven Material freihalten.

## Patentansprüche

1. Filterelement (8), insbesondere für den Einsatz bei Rückspülfiltervorrichtungen, mit einem Filtrationsteil, das zumindest in einer Richtung (24) von einem Verschmutzungen aufweisenden Fluid durchströmbar ist, wobei eine Abfangeinrichtung (62) vorhanden ist, die mindestens einen stabartigen Permanent- oder Elektromagneten (64) aufweist, der magnetisierbare, insbesondere ferritische Anteile, zumindest teilweise aus dem Fluid entfernt bevor dieses durch das Filtrationsteil strömt, wobei eine Ablöseeinrichtung (68) vorhanden ist zum Entfernen der genannten Anteile von der Abfangeinrichtung (62), **dadurch gekennzeichnet, dass** die Ablöseeinrichtung (68) aus einem Abstreifring (70) gebildet ist, der entlang des stabartigen Magneten (64) verfahrbar die Entfernung der von der Abfangeinrichtung (62) festgehaltenen Anteile vornimmt und dass beim Rückspülen des Filtrationsteils der Abstreifring (70) vom Fluidstrom bewegt die Ablösung der an der Abfangeinrichtung (62) festgelegten Anteile vornimmt.

2. Filterelement nach Anspruch 1, **dadurch gekennzeichnet, dass** der jeweilige stabartige Magnet (64) sich entlang der Längsachse des Filtrationsteils erstreckt.

3. Filterelement nach Anspruch 1 oder 2, **dadurch gekennzeichnet, dass** die Ablöseeinrichtung (68) während des unbestromten Zustands des jeweiligen Elektromagneten wirksam ist.

4. Filterelement nach einem der Ansprüche 1 bis 3, **dadurch gekennzeichnet, dass** das Filtrationsteil konisch ausgebildet ist und dass die Baulänge (L) mindestens zehnmal größer ist als der größte vorhandene Durchlaßquerschnitt (D) für das Fluid.

5. Filterelement nach einem der Ansprüche 1 bis 4, **dadurch gekennzeichnet, dass** es als Spaltsiebrohrfilterelement ausgebildet ist.

6. Filterelement nach einem der Ansprüche 1 bis 5, **dadurch gekennzeichnet, dass** die Abfangeinrichtung (62) sich längs der Hälfte des Filtrationsteiles erstreckt, an der das Fluid eintritt, und wo der größte Durchlaßquerschnitt (D) für den Fluidstrom besteht.

7. Filterelement nach einem der Ansprüche 1 bis 6, **dadurch gekennzeichnet, dass** der Abstreifring (70) ringförmig und lose den stabartigen Magneten (64) umfasst und in einer Ruhestellung an dessen Fußteil angeordnet ist und in einer Gebrauchsstellung einen axialen Abstand zu dieser Ruhestellung längs des Magneten (64) einnimmt.

8. Filterelement nach einem der Ansprüche 1 bis 7, **dadurch gekennzeichnet, dass** der Abstreifring (70) zwischen zwei Anschlägen (72) verfahrbar ist zwischen denen sich der stabartige Magnet (64) erstreckt.

## Claims

1. Filter element (8), especially for use with backflushing filter apparatus, with a filtration section, that can be flowed by a fluid containing soiling at least in one direction (24), whereby a catchment device (62) is provided, comprising at least one rod-like permanent or electromagnet (64) which removes magnetisable, especially ferritic particles from the fluid at least in part before the same can flow through the filtration section, whereby a removing device (68) is provided for removing the said particles from the catchment device (62), **characterised in that** the removing device (68) consists of a scraper ring (70) which can be displaced along the rod-like magnet (64) and removes the particles collected by the catchment device (62), and **in that** the scraper ring (70) is moved by the fluid stream during backflushing of the filtration section and carries out the separation of particles deposited on the catchment device (62).

2. Filter element according to Claim 1, **characterised in that** the relevant rod-like magnet (64) extends along the longitudinal axis of the filtration section.

3. Filter element according to Claim 1 or 2, **characterised in that** the removing device (68) is effective in a non-energised condition of the relevant electromagnet.

4. Filter element according to one of the Claims 1 to 3, **characterised in that** the filtration section is conical, and **in that** the construction length (L) is at least ten times greater than the largest existing passage cross-section (D) for the fluid.

5. Filter element according to one of the Claims 1 to 4, **characterised in that** the same takes the form of a split sieve pipe filter element.

6. Filter element according to one of the Claims 1 to 5, **characterised in that** the catchment device (62) extends along one half of the filtration section into which the fluid enters, and where the largest passage cross-section (D) for the fluid stream is located.

7. Filter element according to one of the Claims 1 to 6, **characterised in that** the scraper ring (70) is annular and loosely envelopes the rod-like magnet (64), and **in that** it is located at the foot end of the same in a resting position, and that it takes up an axial distance from the said resting position along the magnet (64) in its operating position.

8. Filter element according to one of the Claims 1 to 7, **characterised in that** the scraper ring (70) can be displaced between two shoulders (72), between which the rod-like magnet (64) extends.

## Revendications

1. Élément filtrant (8), en particulier à utiliser dans des installations de filtre à lavage à contrecourant, muni d'une partie filtrante qui peut être traversée au moins dans une direction (24) par un fluide contenant des impuretés et dans lequel il y a un dispositif collecteur (62) muni d'au moins un aimant permanent ou électroaimant (64) en barre qui retire du fluide au moins en partie des portions aimantables, en particulier ferritiques, avant que le fluide ne traverse la partie filtrante, dans lequel il y a un dispositif d'enlèvement (68) pour retirer du dispositif collecteur (62) lesdites portions,
**caractérisé en ce que** le dispositif d'enlèvement (68) est formé d'une bague de râclage (70) qui retire les portions retenues par le dispositif collecteur (62) en se déplaçant le long des aimants (64) en barre et que, quand la partie filtrante est lavée à contrecourant, la bague de râclage (70) est déplacée par le courant de fluide et détache les portions retenues sur le dispositif collecteur (62).

2. Élément filtrant selon la revendication 1, **caractérisé en ce que** l'aimant (64) en barre en question s'étend le long de l'axe longitudinal de la partie filtrante.

3. Élément filtrant selon la revendication 1 ou 2, **caractérisé en ce que** le dispositif d'enlèvement (68) est actif pendant que du courant ne passe pas dans l'électroaimant.

4. Élément filtrant selon l'une des revendications 1 à 3, **caractérisé en ce que** la partie filtrante est conique et que sa longueur (L) est au moins dix fois plus grande que la section transversale de passage (D) la plus grande pour le fluide.

5. Élément filtrant selon l'une des revendications 1 à 4, **caractérisé en ce qu'**il prend la forme d'un élément filtrant tubulaire à tamis à fentes.

6. Élément filtrant selon l'une des revendications 1 à 5, **caractérisé en ce que** le dispositif collecteur (62) s'étend le long de la moitié de la partie filtrante, à savoir de la moitié où entre le fluide et où la section de passage (D) pour le courant de fluide est la plus grande.

7. Élément filtrant selon l'une des revendications 1 à 6, **caractérisé en ce que** la bague de râclage (70) entoure annulairement et de façon lâche l'aimant (64) en barre et dans une position de repos se trouve sur la partie de base de l'aimant et dans une position d'utilisation elle se met à distance axiale de cette position de repos le long de l'aimant (64).

8. Élément filtrant selon l'une des revendications 1 à 7, **caractérisé en ce que** la bague de râclage (70) est mobile entre deux butées (72) entre lesquelles s'étend l'aimant (64) en barre.
